Europäisches Patentamt

**European Patent Office**

**Office européen des brevets**

(11) Publication number: **0 092 337**
A1

## (12) EUROPEAN PATENT APPLICATION

(21) Application number: **83301899.7**

(22) Date of filing: **05.04.83**

(51) Int. Cl.³: **H 01 R 43/00**

(30) Priority: **21.04.82 GB 8211487**

(43) Date of publication of application: **26.10.83**
Bulletin **83/43**

(84) Designated Contracting States: **BE DE FR GB IT NL**

(71) Applicant: **AMP INCORPORATED, Eisenhower Boulevard, Harrisburg Pennsylvania (US)**

(72) Inventor: **Teagno, Vladimiro, Via Cimabue 1/A, Turin (IT)**
Inventor: **Chiusa, Alessandro, Corso Principe Oddone 86, Turin (IT)**

(74) Representative: **Gray, Robin Oliver et al, 20 Queensmere Slough, Berkshire, SL1 1YZ (GB)**

(54) **Stepping transport device for work pieces.**

(57) A stepping transport device for work pieces such as electrical connectors, comprises a support frame defining a rectilinear track and a carriage (7) reciprocable along the track over a predetermined distance between spaced releasable clamps (7) mounted on the frame for clamping work pieces at work stations spaced uniformly along the track. Releasable clamps (21) being mounted on the carriage at corresponding spacing. The clamps (10, 21) being selectively operable so that the work pieces are clamped to and movable with the carriage (7) during movement in one direction, and are clamped to the frame (5) at the work stations on carriage reverse movement. The frame may be made up of modules arranged end to end, each having a carriage module, a carriage (7) of one end module being half of the effective length of the other modules, each module being of length corresponding to two stations.

Stepping Transport Device for Work Pieces

This invention relates to a stepping transport device or conveyor for conveying work pieces such as electrical connectors between successive work stations at regularly spaced intervals.

A particular use for such a device is in the termination of electrical connectors having a multiplicity of contacts, the connectors being stepped past successive wire insertion devices, each device being arranged to insert a wire in a different terminal of the connector, whereby after passing through the device, a completely terminated connector is obtained. In such an arrangement in use, all of the wire insertion devices are suitably adapted to operate simultaneously between stepping stages at which the connectors are stepped to succeeding stations. A device of this kind is disclosed in European Patent Application Publication No. 0,050,422. In such an arrangement difficulties are presented in maintaining the precise relative position between the connectors and the work stations, due to friction and slippage during the transfer stages, and due to frictional abrasion on and wear of the connectors.

It is an object of the invention to provide such a device in which the relative position can be maintained more precisely than hitherto and with improved handling of the connectors or work pieces to protect against undue wear.

A stepping transport device according to the present invention comprises a support frame defining a rectilinear track, a carriage reciprocable along the track over a predetermined distance, a pair of releasable clamps on the

0092337

frame spaced by the predetermined distance and arranged to clamp a work piece at successive positions in a rectilinear guide path extending parallel to the track, a releasable clamp mounted on the carriage and adapted to clamp a work piece in the guide path and to the carriage, selectively operable means for operating the clamps on the frame, and the clamp on the carriage between clamping and release conditions, and drive means for reciprocating the carriage being operable in one sense when the clamps on the frame are in clamping operation to drive the carriage clamp in one direction between the frame clamps and a reverse sense when the carriage clamp is in clamping operation to drive the carriage clamp between the frame clamps in the opposite direction.

Suitably a pair of carriages is provided arranged end to end along the track, and simultaneously reciprocable by common drive means, whereby the first carriage may be reciprocated between a loading station and a first one of the frame clamps, and the second carriage reciprocates between the first and second frame clamps.

The number of frame clamps and consequently the length of the track will depend on the number of work stations through which stepping is required, and for each additional work station an additional carriage will be required. The invention provides for a modular construction comprising forward and rearward end modules and one or more intermediate modules arranged end to end, the or each intermediate modular comprising a frame section having a frame clamp and a carriage having a carriage clamp, the forward and rearward end modules each comprising a frame section, supporting a frame clamp and a carriage having a carriage clamp, the carriage of the forward module being reciprocable between a loading station and the clamp and the carriage of the rearward module correspondingly being reciprocable between the frame clamp and an unloading station, the frame sections of the modules being secured in end to end relation to define a continuous track with the carriages in end to end engagement for simultaneous movement, the end modules being arranged with the loading and unloading stations at opposite ends of the track.

Suitably the drive means for the carriages comprises a forward drive device mounted on the forward module and a rearward drive device mounted on the rearward module, and each drive device suitably comprises a single acting pneumatic piston and cylinder device.

A support for the work pieces in the guide path is suitably provided by a flat metal strip presenting a smooth support surface for the work pieces, the carriages being supported below the strip with the carriage clamp projecting above the strip on one side and a clamping shoulder projecting above the strip on the other side. Suitably, in the modular construction, the strip is common to all of the modules.

The clamping devices both on the frame and on the carriages are suitably pneumatically operated.

In one embodiment, the or each intermediate module comprises a frame common to two work stations and a carriage of corresponding length. The frame and the carriage are each provided with two sets of clamps, the sets being spaced by the stepping distance. In this embodiment the end modules are each provided with two stations on the frame, but one has a carriage of half the length of the other, the carriages of the end modules being arranged end to end with the carriage of the intermediate module, or those of the intermediate modules, so that in operation the carriage of the intermediate module adjacent an end module, at one end of the device, moves into and out of the frame of the adjacent end module, whereas at the other end, the carriage of the end module moves into or out of the frame of the adjacent intermediate module. This is to say that the combined length of the carriages arranged end to end is less than the combined length of the module frames, as measured along the track between the clamps, by the stepping distance i.e. the spacing between work stations.

The invention will now be described, by way of example, with reference to the accompanying partly diagrammatic drawings, in which:-

Figure 1 is a perspective view of a modular transport device comprising forward and rearward modules and an intermediate module;

Figure 2 is a perspective view to a larger scale of the device of Figure 1, fragmented and with part removed to illustrate the rearward, left hand module in greater detail; and

Figure 3 is a transverse section of part of a conveyor module illustrating the location of the carriage in the frame and the arrangement of the clamping devices.

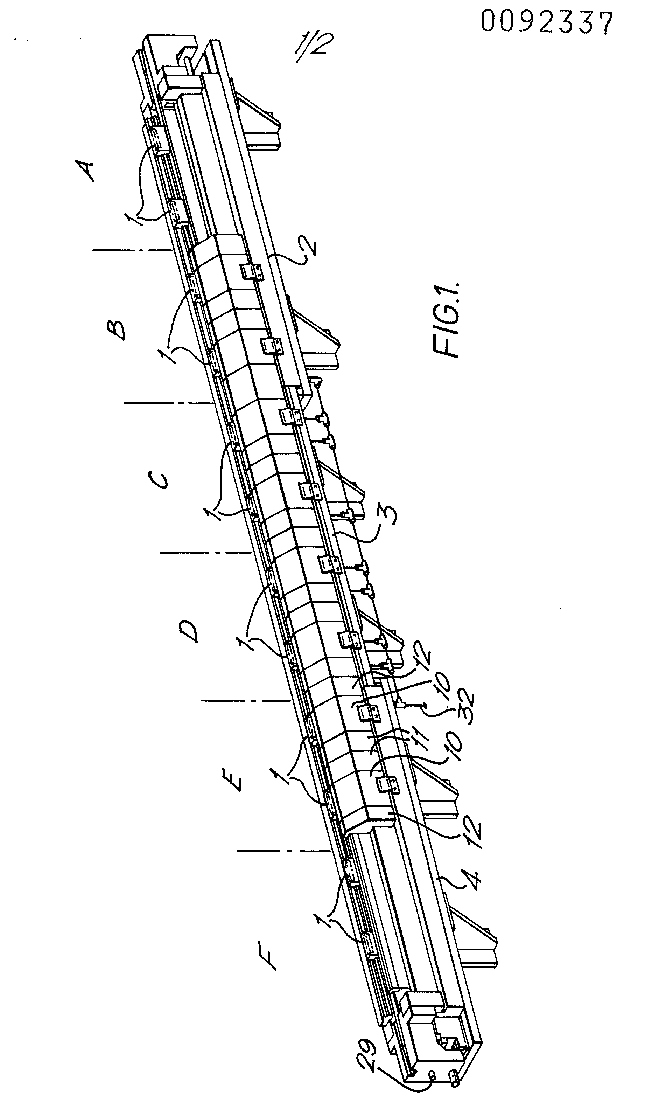

The stepping transport device or conveyor of Figure 1 is adapted to convey spaced pairs of connectors 1 from a loading station A, through successive work stations B to E to an unloading station F. The device is of modular construction, and comprises a forward module 2 covering stations A and B, an intermediate module 3 covering stations C and D and a rearward module 4 covering stations E and F. It should be understood that additional intermediate modules can be provided to increase the number of work stations available without altering the essential structure and operation of the device as shown and described below.

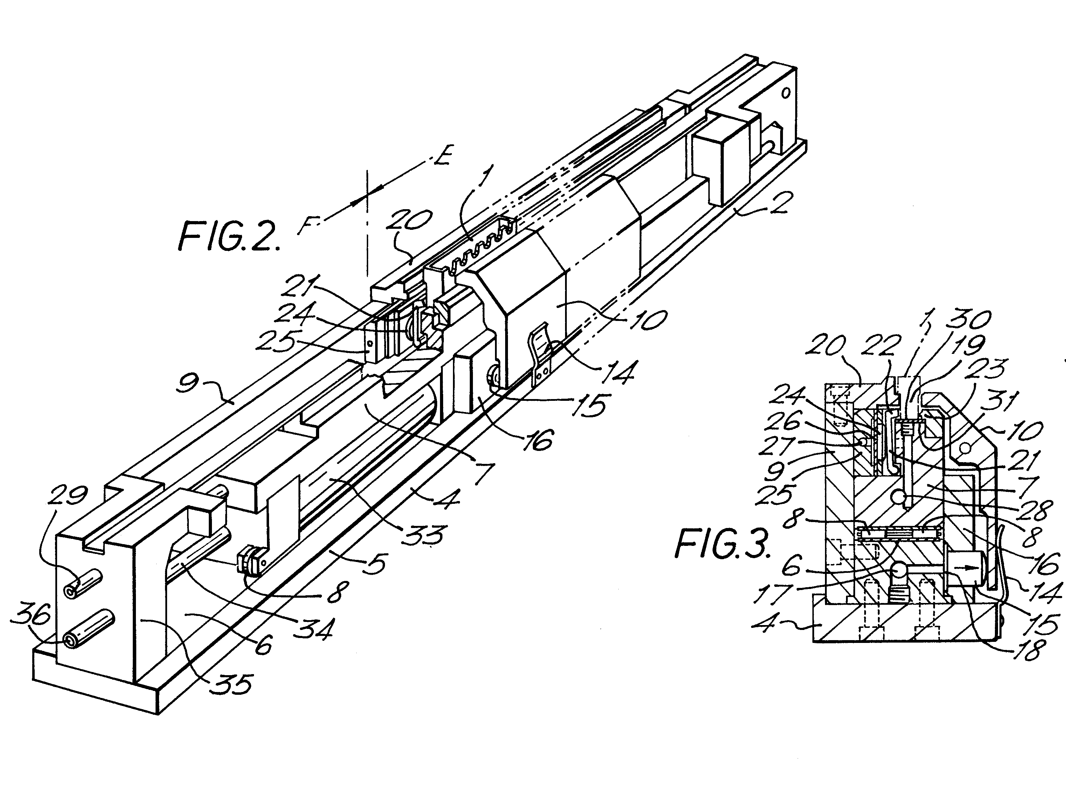

The forward and rearward modules 2 and 4 are similarly constructed and will be described in relation to the rearward module 4, with particular reference to Figure 2. The module 4 comprises a frame 5 defining on an upper surface 6 a rectilinear track for a carriage 7 supported on rollers 8. The track 6 extends between the stations E and F, and the carriage 7 is reciprocable between the unloading station F where it is exposed as seen in Figures 1 and 2, and the operating station E where it is concealed within a channel defined by a rearside 9 of the frame and clamping members 10 mounted on the front of the frame. The module 4 is provided with a pair of clamping members 10 with intermediate spacers 11 and end blocks 12 which are statically secured to the frame and together define a length corresponding to that of the carriage 7, and the predetermined distance through which the carriage is to be stepped. A pair of clamping members 10 is provided to handle a pair of spaced connectors 1 simultaneously, but it will be understood that a single clamping member or more than two could be provided if it were desired to handle a single work piece or more than two work pieces simultaneously.

As shown in Figure 3, each clamping member 10 is pivotally mounted to the frame 4 at a pivot 13 adjacent an upper portion of the carriage 7 and is biased clockwise as seen in Figure 3 to an inoperative condition by a biasing spring 14 engaging its lower end and driving it against a ram 15 supported in a frame flange 16. The ram 15 is operable in the direction of the arrow, i.e. against the action of spring 14 by a resilient diaphragm 18 supplied with pneumatic fluid at pressure through a frame supply conduit 17. The upper end of the clamping member 10 projects above the carriage 7 into a guide path 19 extending longitudinally of the transport device parallel to the track 6, and between the clamping members 10 and filler and end blocks 11 and 12, on one side, and a guide flange 20 supported on the frame flange 9 at the other side.

Below the guide flange 20, the carriage 7, at that side, is provided with a clamping member 21, pivoted at its lower end in a cavity in the carriage, and at its upper end 22 projecting into the guide path 19. The clamping member 21 is pivotally movable in a clockwise sense as seen in Figure 3 to drive the upper end 22 further into the guide path towards an upstanding shoulder 23 formed on the carriage at the opposite side of the guide path, by means of a ram 24 mounted in a flange 25 of the carriage at an outer side and a resilient diaphragm 26 supported by the flange 25 and connected to a pneumatic pressure fluid supply 27 through the flange 25. The supply 27 communicates with a bore 28 extending centrally and longitudinally of the carriage 7 and communicating with a supply pipe 29 at an end of the module. The bore 28 of the carriage is suitably coupled to corresponding bores of adjacent carriages to operate all of the carriage clamps 21 simultaneously.

Although in Figure 2, only a single carriage clamp 21 is shown, it will be understood that the carriage carries a pair of spaced clamps 21 correspondingly spaced to the frame clamps 10 and the desired spacing between the connectors 1 of each pair.

A floor to the guide path 19 is defined by a flat sheet strip 30 extending between and below the shoulder 23 and the upper end of the clamp 22 and extending lengthwise of the complete transport device and common to all of the modules. An upper surface portion 31 of the carriage 7 slidably engages an underside of the strip 30.

As seen in Figure 1, pneumatic pressure fluid is supplied to the frame clamps 10, 15 by a supply line 32 extending below the module frames and connected to the supply conduits 17 of each of the module frames.

The carriage of the rearward module supports a cylinder 33 of a piston and cylinder device, the piston 34 being supported by the frame at a rear flange 35, and being hollow for the supply of penumatic pressure fluid through a supply line 36. Admission of pressure fluid to the cylinder 33 drives the cylinder 33 and the carriage to the right as seen in Figures 1 and 2. Referring now to the forward module at the right of Figures 1 and 2, a piston and cylinder device is arranged at the forward end, in similar manner, and arranged to drive the associated carriage to the left.

The forward module has its piston at the opposite end of its frame to that of the rearward module and a carriage which is of twice the effective length, the carriage having two pairs of carriage clamps spaced by the stepping distance between work stations.

The intermediate module 3 or modules, are not provided with piston and cylinder devices but are arranged so that the intermediate carriage or carriages abut the forward and rearward carriage in end to end fashion and thus the piston and cylinder devices of the forward and rearward modules serve to drive all of the carriages simultaneously in rearward and forward directions respectively. The bores 28 of the carriages for the supply of pressure fluid to the carriage clamps are suitably coupled end to end at the abutting portions of the carriages so that pressure fluid may be supplied to all of the carriages through the supply line 29. The carriage of the or each intermediate module 3 is of double length corresponding to that of the forward module and is adapted to carry two pairs of connectors 1 as seen at stages C and D. To this end it is provided with two pairs of carriage clamps 22 the pairs being spaced by the stepping distance between work stations C and D. Otherwise the or each intermediate module is generally similar in construction to that of the forward and rearward modules 2, 4.

In operation of the device, pressure fluid is initially supplied to the rearward module through supply line 36 to drive all of the carriages towards the forward module and to position the carriage of the forward module at stations A and B.

At the station A a pair of spaced carriage clamps are exposed from the frame clamps at the forward end of the module to allow loading of a pair of connectors 1 in the carriage clamps. A loading jig, not shown, is suitably provided at the station A to facilitate loading of the connectors 1 at the carriage clamps precisely into position at the desired spacing. Pressure fluid is then supplied to the carriage clamps 21 through the supply 29, bores 28 and 27 to drive the upper ends 22 of the clamping members 21 against the connectors 1 and to clamp the connectors 1 against the corresponding carriage shoulders 23 at the opposite sides of the guide path. Pressure supply to the frame clamps 10 through the supply conduit 17, and to the rearward piston and cylinder device 33, 34 through supply 35 is relieved, and pressure fluid is supplied to the cylinder of the forward module to drive the carriages forwardly through the stepping distance i.e. to move all of the carriages forwardly simultaneously until the first connector pair is moved from station A to station B. Suitably stops are provided between the frames and the carriages to define the limits of traverse of the carriages, and on reaching the forward movement stop, fluid pressure is supplied to the frame clamps to clamp the first pair of connectors at station B. Pressure is relieved from the carriage clamps and from the cylinder of the forward module so that the first pair of connectors 1 is clamped by the frame clamps at station B, the carriage clamps are released and the carriages are free for reverse movement. Fluid pressure is now supplied to the piston and cylinder device 33, 34 of the rear module to drive the carriages rearwardly, and once again position the first pair of carriage clamps at the loading station A.

The above described cycle of operations is repeated successively until connector pairs are positioned at each of the stations A to F. At the station F, on movement of the carriage of the rearward module 4 towards the forward module, the rearmost pair of connectors 1 at station F is released, there being no frame clamps at this station, so that the connectors may withdraw from the frame.

It will be understood that during the interval between operating the piston and cylinder devices of the forward and rearward modules 2 and 4, the connectors 1 are clamped at the locations B to E by the frame clamps 10 and work may be performed upon these while they are held precisely in the desired positions. When the frame clamps 10 are released the connectors are simultaneously clamped in those positions to the carriages so that the positions are maintained while the carriages are stepped between the stations.

Claims:-

1. A stepping transport device for conveying work pieces between successive stations spaced at uniform intervals comprising a support frame defining a rectilinear track and a carriage reciprocable along the track over a predetermined distance characterised by a pair of releasable clamps (10) on the frame spaced by the predetermined distance and arranged to clamp a work piece at successive positions in a rectilinear guide path (19) extending parallel to the track (6), a releasable clamp (21) mounted on the carriage (7) and adapted to clamp a work piece (1) in the guide path (19) and to the carriage (7), selectively operable means (15, 24) for operating the clamps (10) on the frame, and the clamp (21) on the carriage (7) between clamping and release conditions, and drive means (36, 33) for reciprocating the carriage (7) being operable in one sense when the clamps (10) on the frame (4) are in clamping operation to drive the carriage clamp (21) in one direction between the frame clamps (10) and in a reverse sense when the carriage clamp (21) is in clamping operation to drive the carriage clamp (22) between the frame clamps (10) in the opposite direction.

2. A device as claimed in Claim 1 characterised in that a pair of carriages (7) is provided arranged end to end along the track (6), and simultaneously reciprocable by common drive means (36, 33), whereby the first carriage (7) may be reciprocated between a loading station (A) and a first one of the frame clamps (10, 13), and the second carriage (7) reciprocates between the first and second frame clamps (10, B, C).

3. A device as claimed in Claim 1 or Claim 2 characterised by a modular construction comprising forward and rearward end modules (2, 4) and one or more intermediate modules (3) arranged end to end, the or each intermediate modular comprising a frame section (5) having

- 11 -

0092337

a frame clamp (10) and a carriage (7) having a carriage clamp (21), the forward and rearward end modules (2, 4) each comprising a frame section (5), supporting a frame clamp (10) and a carriage (7) having a carriage clamp (21), the carriage (7) of the forward module (2) being reciprocable between a loading station (A) and the clamp (10, B) and the carriage (7) of the rearward module (4) correspondingly being reciprocable between the frame clamp (10, E) and an unloading station (F), the frame sections (5) of the modules being secured in end to end relation to define a continuous track (19, 30) with the carriages (7) in end to end engagement for simultaneous movement, the end modules (2, 4) being arranged with the loading and unloading stations (A, F) at opposite ends of the track (19, 30).

4. A device as claimed in Claim 3, <u>characterised in that</u> the drive means (33, 36) for the carriages (7) comprise a forward drive device (33, 36) mounted on the forward module (2) and a rearward drive device (33, 36) mounted on the rearward module (4), each drive device comprising a single acting pneumatic piston and cylinder device (33).

5. A device as claimed in Claim 3 or Claim 4 <u>characterised in that</u> a support for the work pieces (1) in the guide path (19) is provided by a flat metal strip (30) presenting a smooth support surface for the work pieces (1), the carriages (7) being supported below the strip (30) with the carriage clamps (21) projecting above the strip (30) on one side and clamping shoulders (31) projecting above the strip (30) on the other side, the strip (30) being common to all of the modules.

6. A device as claimed in Claim 3 or Claim 4 <u>characterised in that</u> the or each intermediate module (3) comprises a frame common to two work stations (C, D) and a carriage (7) of corresponding length, the frame and the carriage (7) are each provided with two sets of clamps (10, 21), the sets being spaced by the stepping distance, the end modules (2, 4) are each provided with two stations (A, B and E, F) on the frame (5), but one (2) has a carriage (7) of half the length of the other (4), the carriages (7) of the end modules (2, 4) being arranged end to end with the carriage (7) of the intermediate module (3), or those of the intermediate modules, so that in operation the carriage (7) of the intermediate module (3) adjacent an end module (2), at one end of the device, moves into and out of the frame (5) of the adjacent end module (2), whereas at the other end, the carriage (7) of the end module (4) moves into or out of the frame (5) of the adjacent intermediate module (3), and the combined length of the carriages (7) arranged end to end is less than the combined length of the module frames (5), as measured along the track (30) between the clamps, by the stepping distance.

FIG.1.

0092337

1/2

FIG.2.

FIG.3.

0092337

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | | | H 01 R 43/00 |
| A | EP-A-0 037 202 (AMP) <br> * Abstract * | 1 | |
| A | US-A-3 140 087 (HEATH) <br> * Whole document * | 4 | |
| A | GB-A- 476 302 (R. FORKARDT) | | |
| A | FR-A-2 271 007 (CORALI) | | |
| A | FR-A-2 341 966 (MOLEX) | | |

| TECHNICAL FIELDS SEARCHED (Int. Cl. ³) |
|---|
| H 01 R 43/00 |
| B 65 G 25/00 |
| H 01 L 21/00 |
| B 23 Q 7/00 |
| B 23 Q 3/00 |
| B 23 Q 1/00 |

The present search report has been drawn up for all claims

| Place of search | Date of completion of the search | Examiner |
|---|---|---|
| THE HAGUE | 02-08-1983 | MOBOUCK G.C. |